# EUROPÄISCHE PATENTANMELDUNG

(11) **EP 3 150 357 A1**
(43) Veröffentlichungstag der Anmeldung: **05.04.2017**
(21) Anmeldenummer: 16197513.1
(22) Anmeldetag: 31.08.2010
(51) Int. Cl.: B29C 49/42, B29C 31/00, B29C 33/30, B29C 49/48, B29C 49/36, B29C 49/30

(54) **MAGAZINVORRICHTUNG SOWIE VERFAHREN ZUR AUFBEWAHRUNG VON BLASFORMEN**

(30) Priorität: 02.09.2009 DE 102009039700
(62) Teilanmeldung aus: 10174591.7
(71) Anmelder: Krones AG, 93073 Neutraubling (DE)
(72) Erfinder: Meinzinger, Rupert, 93073 Neutraubling (DE); Höllriegl, Thomas, 93073 Neutraubling (DE); Voth, Klaus, 93073 Neutraubling (DE); Albrecht, Thomas, 93073 Neutraubling (DE); Blochmann, Erik, 93073 Neutraubling (DE)
(74) Vertreter: Bittner, Bernhard

(57) **Zusammenfassung**

Eine Magazinvorrichtung (1) zur Aufbewahrung einer Vielzahl von Blasformen (10) außerhalb eines Arbeitsbetriebs der Blasformen (10), welche Blasformen (10) zur Umformung von Kunststoffvorformlingen zu Kunststoffbehältnissen dienen und welche jeweils mehrteilig aufgebaut sind. Erfindungsgemäß weist die Vorrichtung (1) eine Vielzahl von Aufnahmemitteln (2) auf, um die einzelnen Blasformen getrennt voneinander aufzunehmen, wobei die Aufnahmemittel (2) derart ausgebildet sind, dass die Blasformen (10) in einem zumindest teilweise zusammengesetzten Zustand vereinzelt an ihnen aufnehmbar sind. Ferner betrifft die Erfindung ein Verfahren zur Lagerung von Blasformen, welche zur Umformung von Kunststoffvorformlingen zu Kunststoffbehältnissen dienen.

## Beschreibung

Die vorliegende Erfindung bezieht sich auf eine Magazinvorrichtung zur Aufbewahrung von Blasformen. Derartige Blasformen werden im Stand der Technik verwendet, um Kunststoffvorformlinge üblicherweise im Rahmen eines Blasprozesses zu Kunststoffbehältnissen insbesondere PET-Flaschen umzuformen. Dabei ist es bisweilen nötig, diese Blasformen auszuwechseln beispielsweise wenn andere Flaschenformate geblasen werden sollen. Die nicht verwendeten Blasformen werden üblicherweise in Magazinen aufbewahrt, wobei hierzu die Blasformen in ihre Einzelteile wie beispielsweise zwei Seitenteile und ein Bodenteil zerlegt werden und in einen entsprechenden Aufnahmebehälter untergebracht werden.

Aus der WO 2009/018952 A2 ist eine derartige Blasmaschine für Behälter bekannt. Diese weist eine Dornhalter - tragende Förderstrecke und an den Dornhalten mittels lösbarer Kupplungen tauschbar angebrachte Preformdorne auf wobei jede Kupplung einen Dornklemmmechanismus und ein von außen zugängliches mindestens relativ zum Dornhalter verstellbares Löseelement aufweist.

Aus der EP 0 572 107 B1 ist ein Arbeitskopfwechsler für ein Rotationssystem zur Behandlung von Behältnissen bekannt.

Der vorliegenden Erfindung liegt die Aufgabe zu Grunde, insbesondere die Wechselzeiten für derartige Blasformen zu verringern. Dies wird erfindungsgemäß durch eine Magazinvorrichtung nach Anspruch 1 erreicht. Vorteilhafte Ausführungsformen und Weiterbildungen sind Gegenstand der Unteransprüche.

Eine erfindungsgemäße Magazinvorrichtung zur Aufbewahrung einer Vielzahl von Blasformen außerhalb eines Arbeitsbetriebs der Blasformen wobei diese Blasformen zur Umformung von Kunststoffvorformlingen zu Kunststoffbehältnissen dienen und jeweils mehrteilig aufgebaut sind weist erfindungsgemäß eine Vielzahl von Aufnahmemitteln auf, um die einzelnen Blasformen getrennt voneinander aufzunehmen wobei die Aufnahmemittel derart ausgebildet sind, dass die Blasformen vereinzelt von ihnen aufnehmbar sind. Vorzugsweise handelt es sich bei den Aufnahmemitteln um Haltemittel, die in Eingriff mit wenigstens einem Bereich der Blasformen stehen, um so einen stabilen Halt der Blasformen zu ermöglichen.

Bevorzugt werden die Blasformen in einen zumindest teilweise zusammengesetzten Zustand von den Aufnahmemitteln aufgenommen.

Während im Stand der Technik, wie oben erwähnt, die Blasformen in Einzelteilen in Magazinen abgelegt werden wird daher hier vorgeschlagen, die Blasformen zumindest teilweise zusammengesetzt in dem Magazin an oder in entsprechenden Aufnahmemitteln anzuordnen. Bei diesen Aufnahmemitteln kann es sich dabei sowohl um Aufnahmemittel im engeren Sinne handeln, welche die Blasformen greifen, als auch beispielsweise um Stauräume bzw. Aufnahmetaschen, die jeweils zur getrennten Aufnahme von den Blasformen geeignet sind.

Unter teilweise zusammengesetzt wird verstanden, dass eine vorgegebene geometrische Beziehung zwischen den einzelnen Teilen der Blasformen besteht. So können beispielsweise die Seitenteile der Blasform aneinander angeordnet werden und bevorzugt auch noch ein Bodenteil in diese Blasform eingehängt sein. Durch das erfindungsgemäße Magazin wird erreicht, dass einem Wiedereinsetzen der Blasformen nicht zunächst die Einzelteile zusammengesucht werden müssen sondern die Blasform bereits in montagefertigem Zustand vorliegt und gegebenenfalls auch automatisch in die Maschinen eingebaut werden kann.

Insbesondere werden dabei die Blasformen isoliert das heißt in einem arbeitsunfähigen Zustand und insbesondere ohne Formträger aufbewahrt.

Vorteilhaft ist die Magazinvorrichtung derart ausgebildet, dass die Blasformen enger beabstandet sind als im Falle einer Blasmaschine an der sie im normalen Arbeitsbetrieb angeordnet sind.

Üblicherweise werden die Blasformen vollständig zusammengesetzt also mit Seitenteilen und Bodenteilen in den Aufnahmemitteln bzw. an den Haltemitteln angeordnet.

Vorteilhaft sind die Aufnahmemittel an Aufnahmemittel einer Vorrichtung zum Umformen von Kunststoffvorformlingen zu Kunststoffbehältnissen angepasst in der sich die Blasformen in einem Arbeitsbetrieb dieser Vorrichtung befinden. In diesem Falle ist es möglich, dass die Blasformen in einem noch zusammengesetzten Zustand aus der Vorrichtung zum Umformen von Kunststoffvorformlingen zu Kunststoffbehältnissen entnommen werden was ebenfalls bislang im Stand der Technik unbekannt ist. So könnten die Aufnahmemittel der Magazinvorrichtung und der Blasmaschine gleichartig ausgebildet sein und so beispielsweise in gleicher Weise mit den Blasformen in Verbindung stehen. Es wäre jedoch auch möglich dass die Aufnahmemittel der Magazinvorrichtung lediglich in der Weise auf die Aufnahmemittel der Blasmaschine angepasst sind, dass die gleichen Blasformen sowohl von den Aufnahme- bzw. Haltemitteln der Blasmaschine als auch von den Aufnahme- bzw. Haltemitteln der Magazinvorrichtung gehalten bzw. aufgenommen werden können.

So können beispielsweise die Aufnahmemittel in gleichen Weisen ausgebildet werden wie ähnliche Haltemittel, an denen die Blasformen im Arbeitsbetrieb angeordnet sind. Es wäre jedoch auch möglich, dass die Anpassung so ausgebildet ist, dass sie lediglich sicher stellt, dass die Blasformen ohne zusätzliche Adapterelemente in der Magazinvorrichtung untergebracht werden können, also beispielsweise Greifelemente oder dergleichen vorgesehen sind.

Es könnte jedoch auch bewusst ein Adapterstück vorgesehen sein, welches bei der Demontage der Blasformen an dieser oder in diese eingesetzt wird und an dem die Blasformen an den Aufnahmemitteln angeordnet werden.

Bei einer weiteren vorteilhaften Ausführungsform sind mehrere Aufnahmemittel an einer gemeinsamen Trägereinrichtung angeordnet bzw. anordnenbar. Auf diese Weise ist es möglich, eine Vielzahl von Aufnahmemitteln nach Wunsch und bevorzugt gleichzeitig zu bewegen um einen Austausch der Blasformen automatisiert durchzuführen. Bevorzugt weist die Magazinvorrichtung daher eine Transporteinrichtung zum Transportieren bzw. Bewegen der Blasformen bzw. Aufnahmemittel auf. Diese Transporteinrichtung weist bevorzugt eine Antriebseinrichtung auf, es wäre jedoch auch denkbar, dass die Blasformen manuell gegenüber der Magazinvorrichtung bewegt werden.

Bei einer weiteren vorteilhaften Ausführungsform weist die Magazinvorrichtung ein Gestell auf und die Trägereinrichtung ist beweglich gegenüber diesem Gestell ausgebildet. Unter einem Gestell wird jegliches Grundgerüst des Magazins verstanden sodass es sich bei dem Gestell auch beispielsweise um ein stationär angeordnetes Bodenteil handeln kann. Vorteilhaft ist die Trägereinrichtung drehbar gegenüber diesem Gestell angeordnet, oder falls es sich bei der Trägereinrichtung um eine umlaufende Kette handelt, derart, dass die Blasformen bevorzugt in einer vorgegebenen Ebene transportierbar sind. Vorteilhaft entspricht die Ebene, in der die Blasformen in der Magazinvorrichtung bewegbar sind derjenigen Ebene, in der die Blasformen auch in einem Arbeitsbetrieb bewegbar sind. Vorteilhaft sind die Aufnahmemittel mit der Transporteinrichtung entlang einer geschlossenen Bahn, etwa einer kreisförmigen oder ovalen Bahn bewegbar.

Bei einer weiteren vorteilhaften Ausführungsform ist die Trägereinrichtung auch höhenverstellbar das heißt insbesondere in eine Richtung bewegbar, die senkrecht zu der Bewegungsrichtung der Aufnahmemittel steht.

Bei einer weiteren vorteilhaften Ausführungsform ist die Magazinvorrichtungen in ihrer Gesamtheit beweglich ausgebildet. So können beispielsweise Rollen vorgesehen sein, um die Magazinvorrichtung gegenüber dem Boden zu verschieben.

Bei einer weiteren vorteilhaften Ausführungsform weist die Vorrichtung eine Antriebseinrichtung zum Bewegen der Trägereinrichtung auf. Dabei kann es sich beispielsweise um einen Motor bzw. Servomotor handeln, der die Trägereinrichtung in vorgegebener Weise antreibt beispielsweise dreht. Vorteilhaft ist diese Antriebseinrichtung mit einer Antriebseinrichtung der Vorrichtung zum Umformen von Kunststoffvorformlingen zu Kunststoffbehältnissen synchronisierbar. So ist es beispielsweise möglich, die Antriebseinrichtung gemeinsam mit der Vorrichtung zum Umformen zu takten sodass eine automatisierte Entnahme bzw. Zuführung der Blasformen von bzw. an die Vorrichtung zum Umformen möglich ist.

Bei einer weiteren vorteilhaften Ausführungsform ist die Anzahl der Aufnahmemittel größer als die Anzahl der Aufnahmemittel der Vorrichtung zum Umformen von Kunststoffvorformlingen zu Kunststoffbehältnissen. Auf diese Weise ist ein unmittelbarer Wechsel möglich. So kann beispielsweise zu Beginn eines Wechsels eine erste Blasform aus der Vorrichtung zum Umformen entnommen und in einen freien Platz der Magazinvorrichtung abgelegt werden. Anschließend kann jeweils wechselweise eine neue Blasform an die Vorrichtung übergeben werden und die Vorrichtung umgekehrt die alten Blasformen an die Magazinvorrichtung abgeben. So ist es beispielsweise möglich, dass die Magazinvorrichtung ein Aufnahmemittel mehr aufweist als die zugehörige Vorrichtung zum Umformen von Kunststoffvorformlingen.

Vorteilhaft weist die Vorrichtung einen Aufnahmebereich zur Aufnahme weiterer mit dem Blasformen bei der Umformung von Kunststoffvorformlingen zu Kunststoffbehältnissen zusammenwirkender Elemente auf. Bei der Umformung von Kunststoffvorformlingen zu Kunststoffbehältnissen werden neben den Blasformen eine Vielzahl von weiteren Elementen eingesetzt, die bisweilen gemeinsam mit der Blasform auszuwechseln sind. Die Magazinvorrichtung in dieser Ausführungsform erlaubt die Aufnahme eines mehr oder weniger vollständigen Formensatzes wie er zum Umformen von Kunststoffvorformlingen benötigt wird. Auf diese Weise kann der Benutzer in vergleichsweise schneller Zeit die jeweils richtigen Komponenten für eine bestimmte Blasstation auffinden.

Vorteilhaft sind die weiteren Elemente aus einer Gruppe von Elementen ausgewählt welche Haltedorne, Halteklammern, Haltestücke zum Transportieren der Blasform, Reckstangen, Reckanschläge, Blasdüsen und dergleichen enthält. Insbesondere ist es dabei möglich einzelne oder sämtliche Elemente dieser Gruppe in einem zusammengesetztem Zustand mit der einzelnen Blasform bzw. in einem vorgegebenen geometrischem Verhältnis mit der Blasform anzuordnen.

Bei einer weiteren vorteilhaften Ausführungsform ist die Trägereinrichtung als scheibenartiger Körper, als umlaufende Kette, als Schiene oder als bewegbares und insbesondere drehbares Gehäuse ausgebildet. Bevorzugt erlaubt diese Trägereinrichtung wie oben erwähnt einen Transport der Blasformen sodass die Trägereinrichtung gleichzeitig als Transporteinrichtung für die Blasformen dient. Vorteilhaft werden die Blasformen dabei wenigstens zeitweise in einer vorgegeben Ebene transportiert und besonders bevorzugt in der gleichen Ebene, in der sie auch im Arbeitsbetrieb transportiert werden. Es wäre jedoch auch möglich, dass die Blasformen mit der Magazinvorrichtung in einer hierzu abweichenden Richtung transportiert werden beispielsweise senkrecht zu der Ebene transportiert werden.

Bei einer weiteren vorteilhaften Ausführungsform weist die Vorrichtung einen Transferbereich auf, der sowohl für die Übernahme einer ersten Blasrohrform von der Vorrichtung zum Umformen von Kunststoffvorformlingen zu Kunststoffbehältnissen als auch für die Übergabe einer zweiten Form an die Vorrichtung zum Umformen von Kunststoffvorformlingen zu Kunststoffbehältnissen dient.

Über diesen Transferbereich können sowohl alte auszuwechselnde Formen aus der Vorrichtung zum Umformen entnommen werden als auch neue Blasformen an die Vorrichtung zum Umformen übergeben werden. Der Transferbereich ist dabei vorteilhaft der einzige Bereich, über den die Blasformen entnommen werden können.

Dieser Transferbereich kann dabei durch eine Öffnung der Magazinvorrichtung gebildet sein, in welche beispielsweise eine weitere Transporteinrichtung und insbesondere aber nicht ausschließlich ein Einlauf- oder Auslaufstern einer Anlage eingreifen kann. Auf diese Weise ist es möglich, die Magazinvorrichtung zum Wechsel der Blasformen an eine Blasformmaschine anzubinden. Damit sind bevorzugt durch den Transferbereich nur bestimmte Blasformen bzw. Aufnahmemittel für eine Übernahme bzw. Übergabe zugänglich. Dieser Transferbereich kann dabei als Öffnung in einer Gehäusewandung der Magazinvorrichtung ausgestaltet sein.

Dabei wäre es auch möglich, dass dieser Transferbereich simultane Entnahme einer alten Blasform sowie die Zuführung einer neuen Blasform an die Blasmaschine erlaubt. So wäre das beispielsweise möglich, dass die Magazinvorrichtung in der Art eines so genannten Paternoster ausgeführt ist, wobei die Blasformen beispielsweise in vertikaler Richtung gefördert werden und jeweils an bestimmten Stellen an die Blasmaschine übergeben und/oder von dieser entnommen werden. Auch könnten beispielsweise zwei übereinander angeordnete Scheiben vorgesehen sein, wobei eine Scheibe als Aufnahmeeinrichtung für die alten Blasformen und eine weitere Scheibe als Aufnahmeeinrichtung für die neuen Blasformen dient.

In einer weiteren vorteilhaften Ausführungsform weist die Vorrichtung eine Vielzahl von einer Trägereinrichtung angeordneten Halteeinrichtungen auf, wobei an jeder Halteeinrichtung jeweils mindestens zwei Aufnahmemittel zum Aufnehmen der Blasformen vorgesehen sind. So ist es beispielsweise möglich, dass eine dieser Halteeinrichtungen jeweils ein mit einer neuen Blasform besetztes Aufnahmemittel sowie ein leeres Aufnahmemittel aufweist, wobei dieses leere Aufnahmemittel zur Aufnahme einer alten Blasform dient. Auf diese Weise kann die Vorrichtung zum Umrüsten einer Blasmaschine auf zwei unterschiedliche Blasformtypen eingesetzt werden.

Der Begriff "alte Blasformen" bezieht sich im Rahmen der vorliegenden Anmeldung auf diejenigen Blasformen, welche von der Blasmaschine demontiert werden sollen und der Begriff "neue" Blasformen auf diejenigen Blasformen, mit denen die Blasmaschine neu bestückt werden sollen, welche also zunächst in der Magazinvorrichtung angeordnet sind.

Die vorliegende Erfindung ist weiterhin auf ein Verfahren zur Lagerung von Blasformen gerichtet, wobei diese Blasformen zur Umformung von Kunststoffvorformlingen zu Kunststoffbehältnissen dienen. Erfindungsgemäß werden dabei die Blasformen einer Vorrichtung zum Umformen von Kunststoffvorformlingen zu Kunststoffbehältnissen entnommen und in wenigstens teilweise zusammengesetzten Zustand jedoch vereinzelt an oder in einer Vielzahl von Aufnahmemitteln einer Magazinvorrichtung angeordnet.

Daher wird auch verfahrenseitig vorgeschlagen, dass die Blasformen in zumindest teilweise in zusammengesetztem Zustand in der Magazinvorrichtung angeordnet werden. Vorteilhaft werden die Blasformen in einem Zustand gelagert, in dem zumindest Teile der Blasformen aneinander oder miteinander befestigt sind.

Weitere Vorteile und Ausführungsformen ergeben sich aus den beigefügten Zeichnungen: Darin zeigen:
- Fig. 1a - 1h: eine erfindungsgemäße Magazinvorrichtung in einer ersten Ausführungsform;
- Fig. 2a - 2c: eine erfindungsgemäße Magazinvorrichtung in einer zweiten Ausführungsform;
- Fig. 3a - 3i: eine erfindungsgemäße Magazinvorrichtung in einer dritten Ausführungsform;
- Fig. 4a - 4b: zwei Darstellungen zur Veranschaulichung eines Blasformwechsels;
- Fig. 5a - 5g: eine weitere Ausführungsform einer erfindungsgemäßen Magazinvorrichtung.

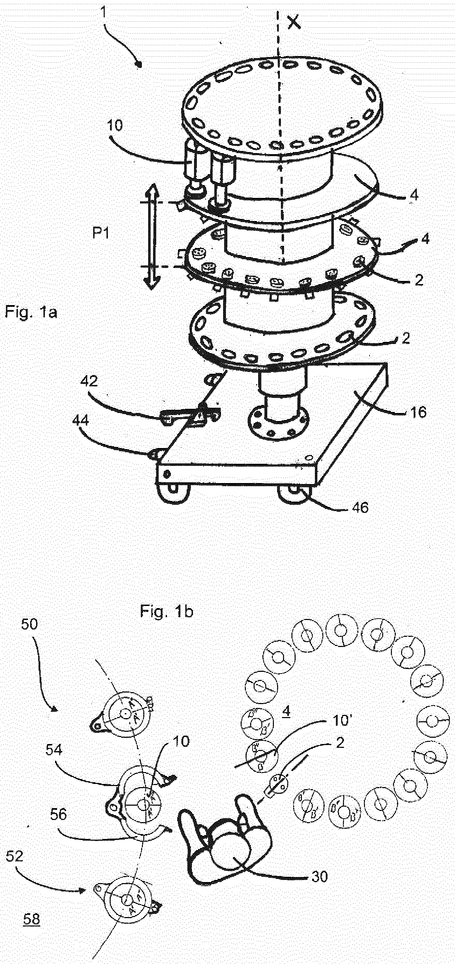

Fig. 1a zeigt eine vereinfachte Darstellung einer erfindungsgemäßen Magazinvorrichtung 1. In dieser Magazinvorrichtung ist eine Vielzahl von Aufnahmemitteln 2 vorgesehen, die hier jeweils an einer Trägereinrichtung 4 in Form einer Scheibe oder Platte angeordnet sind. Man erkennt, dass die Blasformen 10 in einen zusammengesetzten Zustand in der Magazinvorrichtung 1 aufgenommen werden.

Die einzelnen Aufnahmemittel 2 sind hier in Umfangsrichtung insbesondere gleichmäßig auf der Trägereinrichtung 4 angeordnet. Weiterhin ist es möglich, dass mehrere Trägereinrichtungen 4 vorgesehen sind, die beispielsweise auch gemeinsam oder unabhängig voneinander insbesondere jedoch gemeinsam in Richtung des Pfeils P1 verschiebbar sind. Auf diese Weise kann die Magazinvorrichtung zur Aufnahme mehrerer Sätze von Blasformen 10 oder auch höherer Stückzahlen von Blasformen dienen.

Weiterhin sind die einzelnen Trägereinrichtungen um eine gemeinsame Drehachse X drehbar. Die Trägreinrichtungen 4 bzw. auch die einzelnen Aufnahmemittel sind daher beweglich gegenüber einem Gestell 16 angeordnet. Das Bezugszeichen 42 bezieht sich auf eine Verbindungseinrichtung wie einen Haken, mit dem die Magazinvorrichtung beispielsweise mechanisch mit einer Blasformmaschine verbunden werden kann.

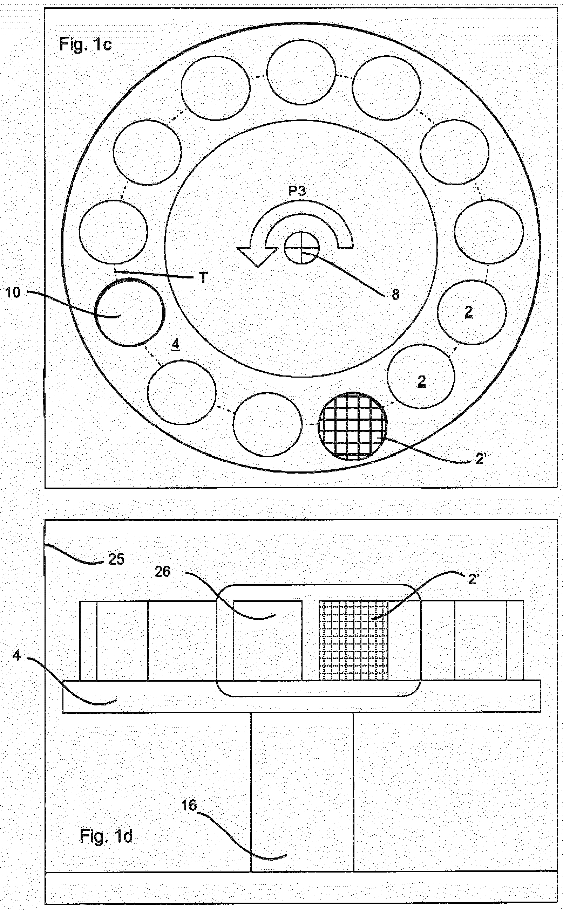

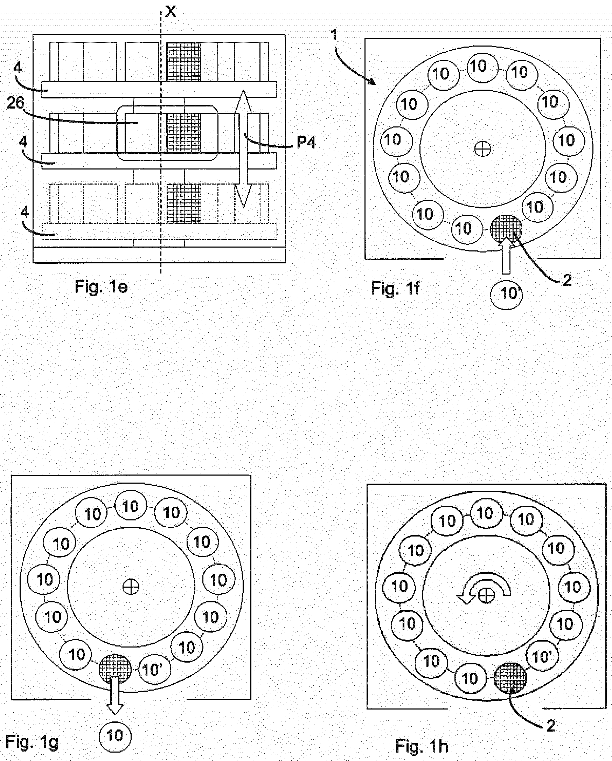

Die Bezugszeichen 44 beziehen sich auf Anschlüsse insbesondere elektrische Anschlüsse, mit denen die Magazinvorrichtung 1 an eine Blasmaschine angebunden werden kann. Genauer gesagt handelt es sich bei der in Fig. 1 a gezeigten Vorrichtung um ein Rundmagazin, welches hier eine Vielzahl von Aufnahmemitteln aufweist, welche in gleicher Weise gestaltet sind wie entsprechende Aufnahmemittel einer Vorrichtung zum Umformen von Kunststoffvorformlingen zu Kunststoffbehältnissen.

Die Teilung der einzelnen Aufnahmemittel 2 bzw. auch der Blasformen ist hier geringer als bei der Blasmaschine, so dass die Magazinvorrichtung vorteilhaft einen Durchmesser aufweist, der zwischen 1 m und 3 m , bevorzugt zwischen 1 m und 2 m liegt. Im Betrieb weist Magazinvorrichtung 1 bevorzugt ein Aufnahmemittel mehr auf als die ihr zugeordnete Blasmaschine, so dass auch die erste von der Blasmaschine entnommene Form platziert werden kann. Wie ausgeführt kann die Magazinvorrichtung mit einem Blasmaschinenkarussell teilungsweise weiter getaktet werden. Mittels Rolleinrichtungen 46 ist die Magazinvorrichtung 19 beweglich ausgeführt und kann an eine Blasmaschine zum automatischen Entnehmen der Blasformen angedockt werden.

Fig. 1 b zeigt eine schematische Darstellung zur Veranschaulichung der Funktionsweise der Magazinvorrichtung. Hier ist auch eine Vorrichtung zum Umformen von Kunststoffvorformlingen für Kunststoffbehältnissen bzw. Blasmaschine 50 vorgesehen, wobei diese Blasmaschine 50 eine Vielzahl von Blasformträgern 52 aufweist, welche sich jeweils aus zwei Seitenteilen 54 und 56 zusammensetzen. Diese beiden Seitenteile 54, 56 nehmen dabei die Blasform 10 zwischen sich auf. Bei einem Blasformwechsel werden zunächst die beiden Seitenteilen 54 und 56 von der Blasform 10 getrennt und anschließend die Blasform 10 in einem in Fig. 1 b gezeigten zusammengesetzten Zustand entnommen. Dies kann, wie in Fig. 1 b gezeigt auch manuell durch einen Benutzer 30 erfolgen. Diese Blasform 10 kann anschließend auf das hier noch freie Aufnahmemittel 2 gesetzt werden. Entsprechend kann eine neue Blasform 10' der Magazinvorrichtung entnommen werden und in den nunmehr freien Platz der Blasmaschine 50 eingesetzt werden. Das Bezugszeichen 58 kennzeichnet ein Blasrad an dem eine Vielzahl von Blasstationen bzw. Blasformträgern 52 angeordnet ist.

Fig. 1c veranschaulicht den Vorgang beim Wechseln der Blasformen. Hier ist wiederum die Trägereinrichtung 4 dargestellt, die hier als entlang des Pfeils P3 drehbare Scheibe ausgeführt ist. Das Bezugszeichen 8 kennzeichnet eine Antriebseinrichtung wie einen Servomotor, der die Trägereinrichtung 4 antreibt. Auf diese Weise werden die einzelnen Blasformen 10 entlang eines vorgegebenen kreisförmigen Transportpfades T in der Magazinvorrichtung transportiert. Damit weist die Magazinvorrichtung in Form der drehbaren Trägereinrichtung 4 eine Transporteinrichtung zum Transportieren der Blasformen 10 entlang eines vorgegebenen Pfades auf. Bezugszeichen 2' kennzeichnet hier ein noch freies Aufnahmemittel zum Aufnehmen einer Blasform 10.

Fig. 1d zeigt eine Seitendarstellung der Vorrichtung aus Fig. 1c. Man erkennt hier, dass an einem Außenumfang der Vorrichtung eine Öffnung 26 vorgesehen ist, durch welche hindurch beispielsweise neue Blasformen von der Magazinvorrichtung entnommen werden können und alte Blasformen an die Magazinvorrichtung geführt werden können. Diese Öffnung stellt hier den erwähnten Transferbereich dar. Wie ausgeführt ist die Trägereinrichtung 4, insbesondere auch gegenüber der Öffnung 26, drehbar. Das Bezugszeichen 25 bezieht sich auf ein Gehäuse, welches die Magazinvorrichtung 1 umgibt.

Das Bezugszeichen 16 kennzeichnet auch hier wieder das Gestell der Vorrichtung, welches hier feststehend angeordnet ist.

Figur 1 e zeigt ein weiteres vorteilhaftes Detail einer erfindungsgemäßen Magazinvorrichtung. Hier sind insgesamt drei Trägereinrichtungen 4 vorgesehen, die hier jeweils drehbar bezüglich der Achse X angeordnet und die entlang des Pfeils P4 höhenverschiebbar sind. Auch ist lediglich eine Öffnung 26 der Höhe der mittleren Trägereinrichtung 4 vorgesehen. Auch diese Öffnung ist hier stationär angeordnet. Durch diese Vorgehensweise kann die Kapazität der Magazinvorrichtung 1 erhöht werden.

Die Fig. 1f -1h zeigen unterschiedliche Situationen zur Veranschaulichung eines Blasformwechsels. Bei der in Fig. 1f gezeigten Situation wird eine alte Blasform 10' an oder in dem freien Aufnahmemittel 2 der Magazinvorrichtung 1 angeordnet. Die anderen Aufnahmemittel sind jeweils noch mit neuen d.h. zu wechselnden Blasformen 10 bestückt.

Bei der in Fig. 1 g gezeigten Situation wird ebenfalls über die Öffnung eine neue Blasform 10 entnommen, die nunmehr der Blasmaschine zugeführt werden kann. Bei der in Fig. 1 h gezeigten Situation wurde die Trägereinrichtung um eine Position bzw. eine Teilung bezüglich der Blasformen 10 weitergedreht, so dass nunmehr wiederum freies Aufnahmemittel 2 zur Aufnahme einer alten Blasform 10' zur Verfügung steht. Auf diese Weise kann sich der Vorgang ausgehend von der in Fig. 1f gezeigten Situation wiederholen.

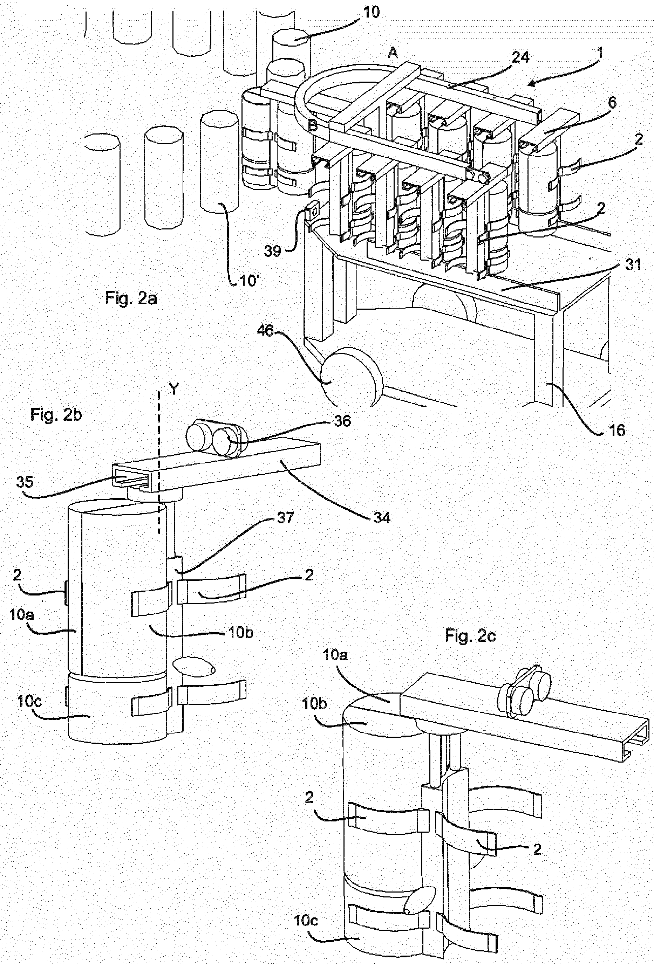

Die Fig. 2a - 2c zeigen eine weitere Ausführungsform einer erfindungsgemäßen Magazinvorrichtung 1. Bei dieser Vorrichtung ist eine Transporteinrichtung 24 in Form einer umlaufenden Schiene vorgesehen. An dieser Transporteinrichtung 24 ist eine Vielzahl von Halteeinrichtungen 6 vorgesehen. Eine Halteeinrichtung 6 weist hier zwei Aufnahmemittel 2 zur Aufnahme von Blasformen 10 auf. Diese Aufnahmemittel 2 sind hier auch um Drehachsen Y bezüglich der Halteeinrichtung 6 drehbar. Eine entsprechende Drehachse in Fig. 2b dargestellt. Die Halteeinrichtungen 6 bzw. Formschlitten hängen hier einzeln in der besagten Führungsschiene bzw. Transporteinrichtung 24. Vorteilhaft ist zwischen den einzelnen Haltereinrichtungen 6 keine Verbindung.

Weiterhin ist eine Linearverschiebungseinheit 34 vorgesehen, die es ermöglicht die Blasform in die Aufnahmemittel hinein oder aus dem Aufnahmemittel 2 heraus zu schieben. Daneben kann auch eine in Fig. 2b gezeigte Hubeinrichtung 37 vorgesehen sein, welche die einzelnen Blasformen 10 in Richtung der Drehachse D heben oder senken kann um sie beispielsweise über eine Zentrierung zu heben. Das Bezugszeichen 35 bezieht sich wieder auf die Schienenführung bzw. Lineareinheit, welche eine Bewegung der beiden Aufnahmemittel 2 in linearer Richtung erlaubt. Bezugszeichen 36 bezieht sich auf eine Rolleneinrichtung, mit der die Halteeinrichtung in ihrer Gesamtheit gegenüber der Schiene 24 bewegbar ist.

Man erkennt hier auch, dass sich die Blasform 10 hier aus zwei Seitenteilen 10a und 10b und einem Bodenteil 10c zusammensetzt. Die Aufnahmemittel greifen hier sowohl die beiden Seitenteile 10a und 10b als auch das Bodenteil 10c.

Weiterhin kann zwischen den Bereichen A und B der Magazinvorrichtung 1 ein Gefälle vorgesehen sein, so dass die Halteeinrichtungen unter Wirkung der Schwerkraft automatisch zu einer Bedienperson wandern. Das Bezugszeichen 31 bezieht sich auf ein Sicherungsmittel, welches eine Bewegung der Halteeinrichtung in anderen Bereichen als dem Montagebereich zwischen A und B verhindert. Es wäre jedoch auch möglich, dass, falls gewünscht, die Blasformen 10 als Einzelteile in einzelnen Aufnahmemitteln entnommen werden. Auch hier ist vorteilhaft eine Andockeinrichtung 39 vorgesehen, um die Magazinvorrichtung 1 an die Blasmaschine anzudocken.

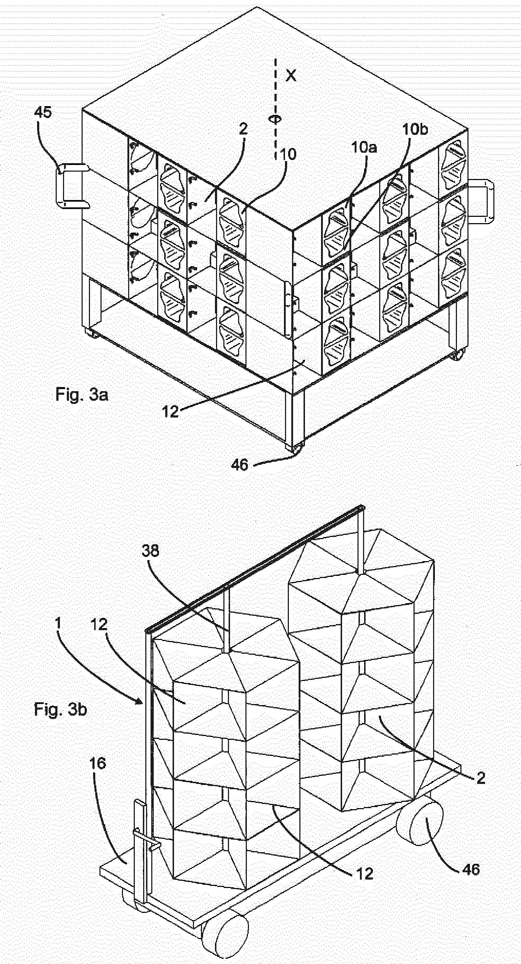

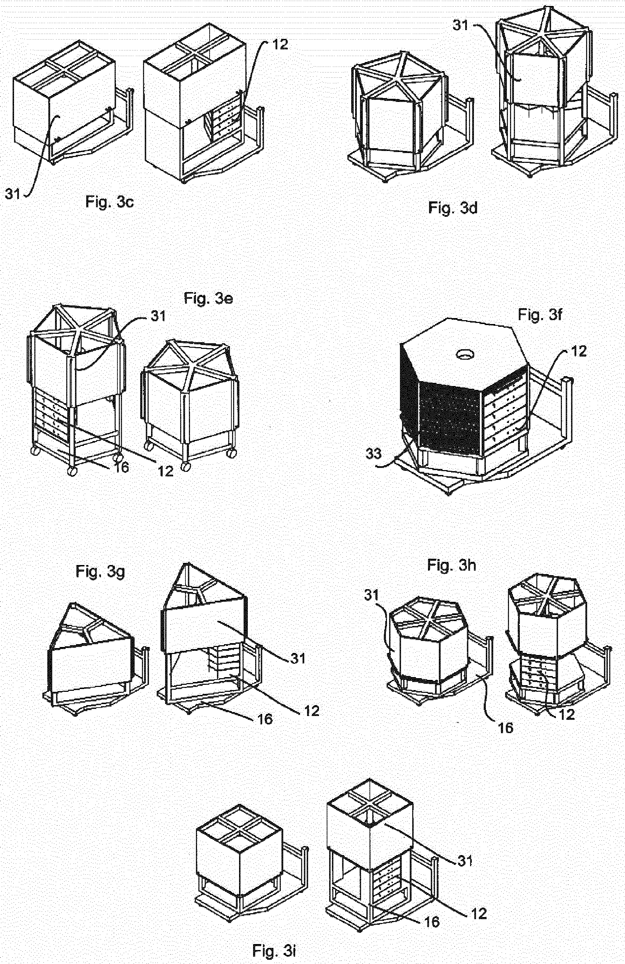

Die Fig. 3a - 3i zeigen eine weitere Ausgestaltung einer erfindungsgemäßen Magazinvorrichtung. Hier sind die Aufnahmemittel 12 jeweils als Hohlräume bzw. Aufnahmeräume ausgestaltet, in die die einzelnen Blasformen 10 in einem auch zumindest teilweise zusammengesetzten Zustand eingesetzt werden können. Auch hier ist das gesamte Gestell vorzugsweise bewegbar und besonders bevorzugt um eine vorgegebene Drehachse X drehbar.

Bei der in Fig. 3a gezeigten Ausführungsform sind jeweils Reihen von Aufnahmemitteln vorgesehen, wobei jede zweite Reihe durch (bspw. einzuwechselnde Blasformen) besetzt ist und jede andere zweite Reihe jeweils leer ist, um Blasformen von einer Blasmaschine zu übernehmen. Das Bezugszeichen 45 bezieht sich auf einen Griff, um die gesamte Vorrichtung zu ziehen.

Fig. 3b zeigt eine weitere Ausführungsform einer erfindungsgemäßen Magazinvorrichtung. Hier ist wiederum eine Welle 38 vorgesehen, um die eine Vielzahl von Aufnahmemitteln 2 drehbar angeordnet ist. Auf diese Weise ist auch hier eine Trägereinrichtung vorgesehen, welche zum Transportieren der einzelnen Blasformen (nicht gezeigt) dient.

Die Fig. 3c bis 3d zeigen unterschiedliche Ausgestaltungen einer erfindungsgemäßen Magazinvorrichtung die sich insbesondere durch die geometrische Auslegung unterscheiden. Dabei weisen die einzelnen Magazinvorrichtungen jeweils auch Abdeckelemente auf, die in Richtung der Drehachse verschiebbar sind, um die Aufnahmemittel und gegebenenfalls die in diesen angeordneten Blasformen abzudecken. Bei der in Fig. 3f gezeigten Ausführungsform ist zusätzlich ein Faltenbalgverschluss 33 vorgesehen, der zum Abdecken der einzelnen Blasformen bzw. der Aufnahmemittel dient.

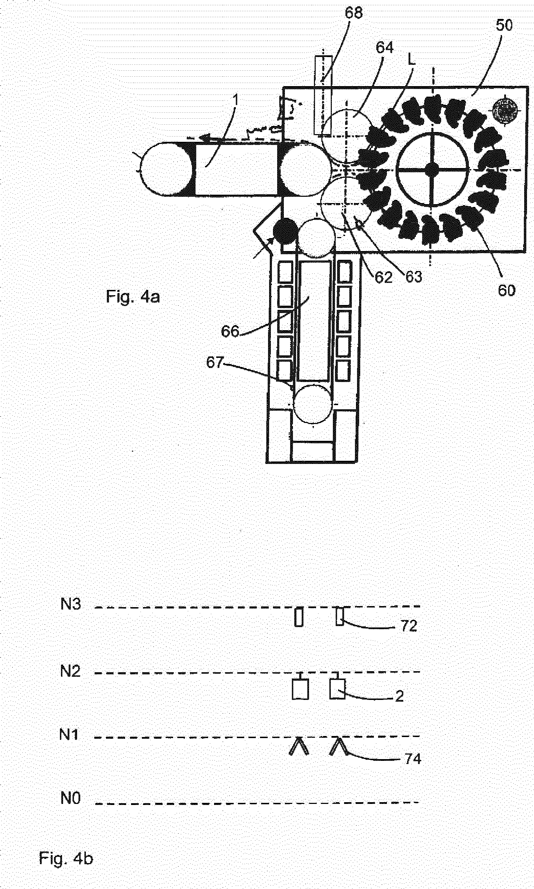

Fig. 4 a zeigt Darstellungen zur Veranschaulichung der erfindungsgemäßen Anlage. Genauer gesagt ist hier eine Heizeinrichtung 66 dargestellt, die eine Vielzahl von Aufnahmedornen bzw. Haltedornen aufweist, welche die einzelnen Behältnisse führen. Das Bezugszeichen 62 bezieht sich auf ein Einlaufrad, von dem die Behältnisse mittels Greifeinrichtungen 63 übernommen werden und so an eine Blasmaschine 15 mit einer Vielzahl von Blasstationen 60 übergeben werden. Nachdem die Kunststoffvorformlinge innerhalb der einzelnen Blasstation 60 zu Behältnissen expandiert wurden, werden die Behältnisse über einen Auslaufstern 64 und eine weitere Transporteinrichtung 68 abgeführt.

Die erfindungsgemäße Magazinvorrichtung 1 kann hier zwischen dem Einlaufstern 62 und dem Auslaufstern 64 angeordnet werden, um insbesondere die Blasformen, hier jedoch auch andere Bestandteile der Vorrichtung auszuwechseln. Genauer gesagt können die ohnehin vorhandenen Einlauf- und Auslaufsterne verwendet werden, um auch einen Blasformwechselvorgang zu vereinfachen. Auch können die oben erwähnten Halteeinrichtungen 63, wie bspw. Greifklammern sowie auch die Haltedorne 67 ausgewechselt werden. So ist es möglich, dass die Haltedorne 67 über den Einlaufstern 62 an die Magazinvorrichtung transportiert werden und das bspw. auch die Greifelemente 63 über den Einlaufstern 62 an die Magazinvorrichtung 1 übergeben werden.

Die Magazinvorrichtung dient hier also sowohl zur Aufnahme der Blasformen 10 als auch bei Bedarf der Greifelemente 63 sowie der Haltedorne 67. Wie durch die eingezeichneten Linien L veranschaulicht werden die Blasformen über den Auslaufstern zu der Magazinvorrichtung geführt und über den Einlaufstern von der Magazinvorrichtung 1 an die Blasmaschine 50 geführt.

Fig. 4b zeigt eine Veranschaulichung bzw. seitliche Ansicht der Magazinvorrichtung 1 aus Fig. 4a. Man erkennt hier, dass drei Ebenen an Transporteinrichtungen vorgesehen sind, wobei in der mittleren Ebene N2 die Blasformen 2 transportiert werden, in der oberen Ebene N3 bspw. Haltedorne und in der unteren Ebene N1 gegebenenfalls Greifklammern, die auf den Ein- und Auslaufstellen 62 und 64 vorhanden sein können. Damit dient die Magazinvorrichtung hier sowohl zur Aufnahme der Blasform als auch zur Aufnahme der Greifklammern bzw. -zangen sowie der Haltedorne. Im Rahmen eines Wechselvorganges können diese Bestandteile gemeinsam ausgewechselt werden.

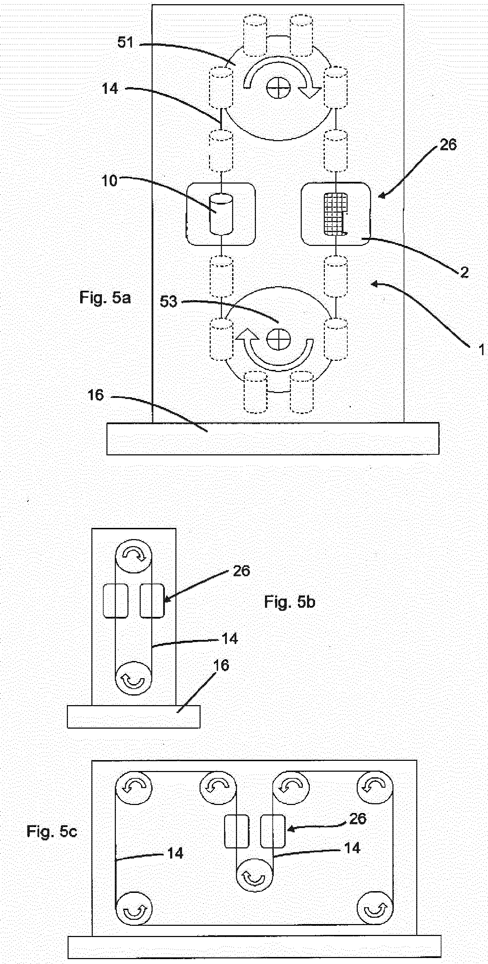

Fig. 5a bis 5g zeigen eine weitere Ausführungsform der vorliegenden Erfindung. Hier ist die Magazinvorrichtung 1 als Transportkette ausgeführt, welche hier die Blasformen zwischen zwei Umlenkrädern 51, 53 in im Wesentlichen vertikaler Richtung transportieren. Auch ist eine Öffnung 26 vorgesehen, über welche der Trägereinrichtung 14 Blasformen zugeführt und von dieser entnommen werden können. Diese Transporteinrichtung 14 ist hier wiederum an einem während der Montage stationären Gestell 16 angeordnet.

Bei der Darstellung in Fig. 5b erkennt man ebenfalls die paternoster - artige Ausführung, wobei die Blasformen über die Öffnung 26 zu- und abgeführt werden.

Fig. 5c zeigt eine weitere Ausführungsform, bei der die Transportkette 14 desöfteren umgelenkt wird um auf diese Weise die Aufnahmekapazität zu erhöhen ohne gleichzeitig die Magazinvorrichtung sehr hoch ausführen zu müssen.

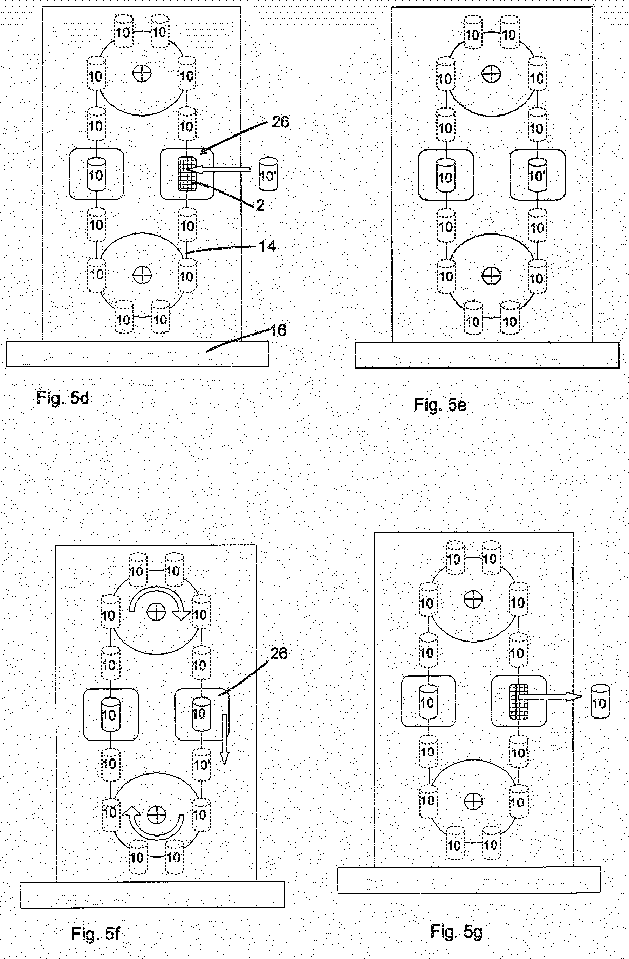

Die Fig. 5d - 5g veranschaulichen wiederum den Wechselvorgang. Bei der in Fig. 5d gezeigten Situation wird eine alte Blasform 10' von der Blasmaschine über die Öffnung 26 an ein freies Aufnahmemittel 2 übergeben. Fig. 5e zeigt die Situation bei der die alte Blasform an dem Aufnahmemittel angeordnet ist. Bei Fig. 5f wurde die Transportvorrichtung um eine Teilung weiter getaktet, so dass die alte Blasform 10' nunmehr unterhalb der Öffnung 26 ist. Über die Öffnung 26 kann nunmehr eine neue Blasform 10 entnommen und an die Blasmaschine übergeben werden, wie in Fig. 5g gezeigt. Anschließend kann sich der Zyklus ausgehend von der in Fig. 5d gezeigten Situation wiederholen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Magazinvorrichtung
- 2: Aufnahmemittel, Haltemittel
- 4: Trägereinrichtung, Platte
- 6: Halteeinrichtung
- 8: Antriebseinrichtung
- 10, 10': Blasform
- 12: Aufnahmemittel in Form von Aufnahmetaschen
- 16: Gestell
- 24: Transporteinrichtung in Form einer umlaufenden Schiene
- 25: Gehäuse
- 26: Öffnung, Transferbereich
- 30: Benutzer
- 31: Sicherungsmittel
- 33: Faltenbalgverschluss
- 34: Linearverschiebungseinheit
- 35: Schienenführung
- 36: Rolleinrichtung
- 37: Hubeinrichtung
- 38: Welle
- 39: Andockeinrichtung
- 42: Verbindungseinrichtung
- 44: (elektrische) Anschlüsse
- 45: Griff
- 46: Rolleinrichtung
- 50: Blasmaschine, Vorrichtung zum Umformen von Kunsttoffvorformlingen
- 51: Umlenkrad
- 52: Blasformträger
- 53: Umlenkrad
- 54, 56: Seitenteile des Blasformträgers
- 60: Blasstation
- 62: Einlaufstern
- 63: Greifelement
- 64: Auslaufstern
- 66: Heizeinrichtung
- 67: Haltedorne
- 68: weitere Transporteinrichtung

- A, B: Bereiche
- P1, P3, P4: Pfeile
- X, Y: Drehachsen
- N0, N1, N2, N3: Ebenen
- L: Transportverlaufslinien für Blasformen

## Patentansprüche

1. Magazinvorrichtung (1) zur Aufbewahrung einer Vielzahl von Blasformen (10) außerhalb eines Arbeitsbetriebs der Blasformen (10), welche Blasformen (10) zur Umformung von Kunststoffvorformlingen zu Kunststoffbehältnissen dienen und welche jeweils mehrteilig aufgebaut sind,
**dadurch gekennzeichnet, dass**
die Magazinvorrichtung (1) eine Vielzahl von Aufnahmemitteln (2, 12) aufweist, um
die einzelnen Blasformen getrennt voneinander aufzunehmen, wobei die Aufnahmemittel (2, 12) derart ausgebildet sind, dass die Blasformen (10) vereinzelt von ihnen aufnehmbar sind.

2. Magazinvorrichtung (1) nach Anspruch 1,
**dadurch gekennzeichnet, dass**
die Blasformen in einem zumindest teilweise zusammengesetzten Zustand von den Aufnahmemitteln (2, 12) aufnehmbar sind.

3. Magazinvorrichtung (1) nach Anspruch 1,
**dadurch gekennzeichnet, dass**
die Aufnahmemittel (2, 12) an Aufnahmemittel einer Vorrichtung (50) zum Umformen von Kunststoffvorformlingen zu Kunststoffbehältnissen angepasst sind, in denen sich die Blasformen (10) in einem Arbeitsbetrieb dieser Vorrichtung (50) befinden.

4. Magazinvorrichtung nach wenigstens einem der vorangegangenen Ansprüche,
**dadurch gekennzeichnet, dass**
die Magazinvorrichtung (1) eine Transporteinrichtung zum Transportieren der Blasformen (10) aufweist.

5. Magazinvorrichtung nach wenigstens einem der vorangegangenen Ansprüche,
**dadurch gekennzeichnet, dass**
mehrere Aufnahmemittel (2, 12) auf einer gemeinsamen Trägereinrichtung (4, 14, 24) angeordnet sind.

6. Magazinvorrichtung nach Anspruch 3,
**dadurch gekennzeichnet, dass**
die Magazinvorrichtung ein Gestell (16) aufweist und die Trägereinrichtung (4, 14, 24) beweglich gegenüber diesem Gestell (16) ausgebildet ist.

7. Magazinvorrichtung nach wenigstens einem der vorangegangenen Ansprüche,
**dadurch gekennzeichnet, dass**
die Magazinvorrichtung (1) in ihrer Gesamtheit beweglich ausgebildet ist.

8. Magazinvorrichtung nach wenigstens einem der vorangegangenen Ansprüche 3 - 5,
**dadurch gekennzeichnet, dass**
die Magazinvorrichtung (1) eine Antriebseinrichtung (8) zum Bewegen der Trägereinrichtung (4, 14, 24) aufweist.

9. Magazinvorrichtung nach Anspruch 7,
**dadurch gekennzeichnet, dass**
die Antriebseinrichtung (8) mit einer Antriebseinrichtung der Vorrichtung (50) zum Umformen von Kunststoffvorformlingen zu Kunststoffbehältnissen synchronisierbar ist.

10. Magazinvorrichtung nach wenigstens einem der vorangegangenen Ansprüche,
**dadurch gekennzeichnet, dass**
die Anzahl der Aufnahmemittel (2, 12)) größer ist als die Anzahl der Aufnahmemittel (52) der Vorrichtung (50) zum Umformen von Kunststoffvorformlingen zu Kunststoffbehältnissen.

11. Magazinvorrichtung nach wenigstens einem der vorangegangenen Ansprüche,
**dadurch gekennzeichnet, dass**
die Magazinvorrichtung (1) einen Aufnahmebereich zur Aufnahme weiterer mit den Blasformen bei der Umformung von Kunststoffvorformlingen zu Kunststoffbehältnissen zusammenwirkender Elemente aufweist.

12. Magazinvorrichtung nach wenigstens einem der vorangegangenen Ansprüche 3- 10,
**dadurch gekennzeichnet, dass**
die Trägereinrichtung als scheibenartiger Körper (4) als umlaufende Kette (14) als Schiene (24) oder als bewegliches Gehäuse ausgebildet ist.

13. Magazinvorrichtung nach wenigstens einem der vorangegangenen Ansprüche,
**dadurch gekennzeichnet, dass**
die Magazinvorrichtung einen Transferbereich (26) aufweist, der sowohl die Übernahme einer ersten Blasform von der Vorrichtung zum Umformen von Kunststoffvorformlingen zu Kunsttoffbehältnissen als auch die Übergabe einer zweiten Blasform an die die Vorrichtung zum Umformen von Kunststoffvorformlingen zu Kunsttoffbehältnissen erlaubt.

14. Magazinvorrichtung nach wenigstens einem der vorangegangenen Ansprüche,
**dadurch gekennzeichnet, dass**
die Magazinvorrichtung (1) eine Vielzahl von an einer Trägereinrichtung angeordneten Halteinrichtungen (6) aufweist, wobei an jeder Halteeinrichtung jeweils mindestens zwei Aufnahmemittel (2, 12) vorgesehen sind.

15. Verfahren zur Lagerung von Blasformen, welche zur Umformung von Kunststoffvorformlingen zu Kunststoffbehältnissen dienen,
**dadurch gekennzeichnet, dass**
die Blasformen einer Vorrichtung zum Umformen von Kunststoffvorformlingen zu Kunsttoffbehältnissen entnommen werden und bevorzugt in wenigstens teilweise zusammengesetztem Zustand vereinzelt an einer Vielzahl von Aufnahmemitteln einer Magazinvorrichtung (1) angeordnet werden.
